# FASCICULE DE BREVET EUROPEEN

(11) **EP 1 247 822 B1**
(45) Date de publication et mention de la délivrance du brevet: **17.10.2007**
(21) Numéro de dépôt: 02290737.2
(22) Date de dépôt: 22.03.2002
(51) Int. Cl.: C08F 255/00, C08J 3/22, C08L 23/00, C08L 51/06, H01B 3/18, H01B 13/06

(54) **Procédé de fabrication d'une composition à base de polymère réticulé au moyen de silane, et composition obtenue par ce procédé, et procédé de fabrication d'un câble muni d'une gaine en une telle composition**
Mit Silan vernetzte Polymerzusammensetzung, Verfahren zu deren Herstellung und zur Herstellung eines mit dieser Zusammensetzung beschichteten Kabels
Silane crosslinked polymer composition, method for making said composition and method for making a cable coated by said composition

(30) Priorité: 27.03.2001 FR 0104541
(43) Date de publication de la demande: 09.10.2002
(73) Titulaire: Nexans, 75020 Paris (FR)
(72) Inventeur: Barioz, Chantal, 69003 Lyon (FR)
(74) Mandataire: Feray, Valérie

(56) Documents cités:
- EP-A- 0 281 268
- EP-A- 0 365 289
- EP-A- 0 426 073
- US-A- 6 107 413
- DATABASE WPI Section Ch, Week 197931 Derwent Publications Ltd., London, GB; Class A17, AN 1979-56756B XP002182445 & JP 54 076647 A (HITACHI CABLE LTD), 19 juin 1979 (1979-06-19)
- DATABASE WPI Section Ch, Week 197931 Derwent Publications Ltd., London, GB; Class A17, AN 1979-56756B XP002247037 & JP 54 076647 A (HITACHI CABLE LTD), 19 juin 1979 (1979-06-19)
- DATABASE WPI Section Ch, Week 199528 Derwent Publications Ltd., London, GB; Class A85, AN 1995-210067 XP002247038 & JP 07 122139 A (TOYOKUNI DENSEN KK), 12 mai 1995 (1995-05-12)

## Description

La présente invention concerne un procédé de fabrication d'une composition à base d'un polymère réticulé au moyen de silane, une composition obtenue par ce procédé et un procédé de fabrication d'un câble muni d'une gaine en une telle composition.

Les polymères réticulés au moyen de silane sont bien connus, et utilisés notamment pour réaliser l'isolation des câble d'énergie. Ils ont l'avantage de posséder des propriétés d'isolation électrique et de tenue mécanique particulièrement intéressantes, la réticulation augmentant la tenue mécanique de la composition.

Il est connu en effet que les propriétés physiques des polymères peuvent être modifiées en réticulant les chaînes de polymère. La réticulation au moyen de silane, et plus généralement la réticulation utilisant comme agent de réticulation un ou des alkoxysilanes oléfiniques non saturés, est un procédé largement utilisé pour réticuler les polymères. Il existe plusieurs procédés de réticulation au moyen de silanes connus.

L'un de ces procédés connus de réticulation de polymères au moyen de silanes est décrit dans le brevet EP-0 426 073. Il consiste à mélanger :
- un polymère de base, notamment un polymère thermoplastique comme par exemple une polyoléfine, telle que le polyéthylène,
- un polymère porteur de l'agent de réticulation au silane, compatible avec le polymère de base, c'est-à-dire qu'il est soluble ou dispersable dans ce dernier ; ce polymère porteur est un polymère poreux qui absorbe ou encapsule le silane (en général liquide) sans réagir avec lui
- un générateur de radicaux libres tel qu'un peroxyde, servant à initialiser la réaction de réticulation.

Le mélange est effectué par exemple dans une extrudeuse, notamment une extrudeuse à vis.

La réticulation est ensuite déclenchée en présence d'eau.

On peut notamment extruder ce mélange sur un câble.

Il est important que l'isolation des câbles d'énergie confère à ces derniers une très bonne tenue au feu. Pour cela, de manière connue, on peut ajouter aux polymères des additifs, dits ignifugeants, améliorant leur résistance au feu. Il est ainsi mentionné dans le document décrit ci-dessus que de tels additifs peuvent être incorporés dans le polymère porteur.

Cependant, une telle solution n'est pas satisfaisante car le silane est absorbé par les additifs ignifugeants, notamment losqu'ils sont minéraux. Dès lors, les fonctions du silane destinées à servir à la réticulation sont consommées et donc neutralisées par la réaction silane-additif ignifugeant.

Une autre solution connue pour réaliser des polymères réticulés au moyen de silane ayant une bonne tenue au feu consiste à incorporer l'additif ignifugeant dans le polymère de base ; ce dernier est alors dit chargé. La société PolyOne commercialise un polymère de base contenant du trihydrate d'alumine comme charge ignifugeante, et destiné à être utilisé pour la préparation d'un polymère réticulé silane selon le procédé décrit ci-dessus.

Un inconvénient majeur de ce polymère de base réside dans le fait que la réticulation doit être effectuée en milieu humide, et plus précisément dans une atmosphère saturée en vapeur d'eau ou par ajout d'eau dans le mélange. Ceci rend le procédé de fabrication très complexe et peu économique.

Un autre inconvénient majeur de ce polymère réside dans le fait que la charge ignifugeante se décompose durant l'extrusion. En effet, les charges ignifugeantes ont la propriété de se décomposer à partir d'une certaine température afin de jouer leur rôle ignifugeant.

Cette décomposition est par exemple présente pendant l'étape d'extrusion d'un mélange à base d'une polyoléfine ignifugeante comprenant du trihydrate d'alumine et de silane telle que décrite dans le document US 6 107 413.

Une décomposition prématurée de la charge durant la fabrication la rend donc inefficace durant l'utilisation du matériau.

En outre, cette décomposition provoque la présence d'eau dans le matériau finalement obtenu, ce qui est très préjudiciable aux caractéristiques mécaniques et d'isolation électriques recherchées.

Le but de la présente invention est donc de mettre au point un procédé de fabrication d'une composition à base de polymère réticulé au moyen de silane ayant une bonne tenue au feu et dans lequel la réticulation peut être effectuée à l'air ambiant.

La présente invention porpose à cet effet un procédé de fabrication selon la revendication 1.

L'extrusion a lieu, selon l'invention, par chauffage à une température suffisante pour entraîner la décomposition du générateur de radicaux libres, mais insuffisante pour entraîner la décomposition de la charge , qui détériorerait les propriétés électriques et mécaniques de la composition obtenue. Ainsi, la décomposition du générateur de radicaux libres, nécessaire à l'exécution de la phase de réticulation, a lieu sans entraîner de décomposition de la charge.

Les températures mesurées durant l'extrusion de décomposition de la charge ignifugeante et du générateur de radicaux libres sont inférieures aux températures absolues de décomposition de ces derniers qui seraient mesurées en dehors de la composition à réticuler. En effet, le matériau dans lequel se trouvent la charge et le générateur de radicaux libres atteint durant l'extrusion une température réelle au niveau moléculaire supérieure à celle affichée par la mesure de température, et due notamment à l'auto-échauffement du matériau, au cisaillement interne.

Grâce au procédé selon l'invention, et notamment grâce au choix d'un générateur de radicaux libres dont la température de décomposition absolue est inférieure à 165°C, c'est-à-dire assez faible, il est en outre possible d'éviter l'étape de réticulation par apport d'une grande quantité d'eau (atmosphère saturée en vapeur d'eau ou apport direct d'eau), de sorte que l'humidité de l'atmosphère ambiante est suffisante pour effectuer la réticulation du polymère de base.

Selon l'invention, la charge contenue dans le polymère de base est du trihydrate d'alumine. Une telle charge a une température absolue de début de décomposition relativement basse, de l'ordre de 180°C. Son utilisation est rendue possible par le fait que le générateur de radicaux libres utilisé a une température de décomposition plus faible que ceux utilisés dans l'art antérieur. Le trihydrate d'alumine a l'avantage d'offrir au polymère dans lequel il est incorporé des propriétés de tenue au feu comparables à celles de l'oxyde de magnésium Mg(OH)₂, tout en étant nettement moins onéreux que ce dernier.

Selon une caractéristique avantageuse de l'invention, on ajoute au polymère porteur, préalablement au mélange, un polymère greffé avec de l'anhydride maléique. L'utilisation de ce polymère évite, grâce au fait que les groupements acide carboxylique réagissent avec la charge, que l'agent de réticulation à base de silane se greffe sur la charge au lieu de se greffer principalement sur le polymère de base. L'anhydride maléique sert en outre de compatibilisant.

D'autre part, les opérations a), b) et c) peuvent être effectuées simultanément ou les unes à la suite des autres.

L'invention porte également sur un procédé de fabrication d'un câble comprenant une gaine en une composition selon l'invention, ce procédé comprenant une opération d'extrusion avant la réticulation.

Le câble ainsi fabriqué peut être un câble de télécommunications ou d'énergie.

D'autres caractéristiques et avantages de la présente invention apparaîtront à la lumière de la description qui va suivre d'un mode de réalisation de l'invention.

### Polymère de base

Le polymère de base est celui à réticuler. C'est un polymère thermoplastique ou un mélange de tels polymères. Le polymère de base peut être choisi notamment parmi les polyoléfines telles que le polyéthylène (LLDPE, LDPE, HDPE) ou un copolymère d'éthylène et d'un autre monomère, un copolymère d'éthylène et d'acétate de vinyle EVA. En général, le polymère de base est solide, et se trouve par exemple sous forme de granulés.

### Polymère po rteur

Le polymère porteur est sous forme solide, constitué de particules par exemple, et doit être compatible avec le polymère de base et l'agent de réticulation à base de silane. Il doit être capable d'incorporer l'agent de réticulation (le plus souvent liquide) tout en conservant sa forme solide et granulaire. Parmi les polymères poreux connus pour ce type d'utilisations, notamment décrits dans le document EP-0 426 073, on trouve des polymères poreux susceptibles d'incorporer l'agent de réticulation à base de silane dans leurs pores, ou encore des polymères gonflables qui gonflent en présence de silane, ou encore des encapsulats dans lesquels le silane est contenu dans des capsules constituées du polymère poreux.

De manière plus générale, tous les polymères poreux décrits dans le document ci-dessus mentionné peuvent être utilisés pour mettre en oeuvre la présente invention. Cela peut être notamment du polyéthylène poreux, expansé ou craquelé, ou encore de l'EVA poreux, expansé ou craquelé.

### Agent de réticula tion à base de silane

Ce sont les silanes susceptibles d'être greffés sur et réticulés avec le ou les polymères de base décrits ci-dessus. Cela peut être par exemple du vinyltriéthoxysilane.

### Générateur de radicaux libres

Il permet de libérer des sites de radicaux libres au sein du polymère de base. Ce sont généralement des péroxydes organiques.

Selon l'invention, on utilise un générateur de radicaux libres ayant une température absolue de décomposition inférieure à 165°C. Un générateur de radicaux libres ayant une telle propriété peut être par exemple le triméthyl cyclohexane butyl péroxyde.

### Catalyseur d'hydrolyse

Pour accélérer la réaction de réticulation à l'atmosphère ambiante, on peut incorporer dans le mélange selon l'invention un catalyseur d'hydrolyse, tel que par exemple un sel d'étain tel que le dibutyldilaurate d'étain.

### Autres additifs

Les additifs utilisés communément et bien connus de l'homme du métier pour la réticulation peuvent être utilisés dans le cadre de la présente invention. Ils comprennent notamment des anti-oxydants, des stabilisateurs.

### Polymère greffé anhydride maléigue

Selon l'invention, on incorpore au polymère de base un autre polymère greffé au moyen d'anhydride maléique. L'anhydride maléique permet d'éviter, selon l'invention, que lors de la réaction de réticulation, le silane n'aille se greffer sur la charge ignifugeante plutôt que sur le polymère de base. De plus, l'anhydride maléique sert d'agent compatibilisant entre la charge ignifugeante et le polymère de base.

Ce polymère greffé anhydride maléique peut être par exempledu polyéthylène, des terpolymères (ethylène butyl acétate EBA, éthylène méthyl acétate EMA), de l'éthylène propyl, de l'EVA.

On donne ci-après un exemple de composition entrant dans la mise en oeuvre du procédé selon l'invention, ainsi que le procédé correspondant de mise en oeuvre.

### Préparation du polymère de base

On prépare un composé A en mélangeant en continu et à chaud (température d'environ 130°C) :
- 90 parts de polyéthylène
- 10 parts de polyéthylène greffé avec de l'anhydride maléique
- 110 parts de trihydrate d'alumine
- 2 à 3 parts d'agents protecteurs (antioxydants, anti-UV).

Le composé A ainsi obtenu est homogène.

### Préparation du polymère porteur

On prépare un mélange B en imprégnant 50 parts de polyéthylène poreux avec un mélange liquide contenant :
- 89,8 parts d'un agent de réticulation à base de silane ayant pour formule tel que du vinyltriéthoxysilane
- 7,7 parts de péroxyde tel que le 1-1-Bis(Tert-butyl peroxy)3-3-5-triméthylcyclohexane ayant une température absolue de décomposition de 128°C
- 2,5 parts de sel d'étain comme catalyseur

### Préparation de la composition

On chauffe et on mélange simultanément, par exemple au sein d'une extrudeuse, 100 parts du composé A avec 5 à 6 parts du mélange B, à une température inférieure à 165°C, et de préférence comprise entre 135°C et 155°C. Cette opération est effectuée dans l'atmosphère ambiante, c'est-à-dire sans apport d'eau supplémentaire sous forme vapeur ou liquide.

Il se produit alors une réaction de réticulation dite d'« auto-réticulation », et l'on obtient un polymère réticulé.

Lors de la fabrication d'un câble, de télécommunications ou d'énergie, comprenant une gaine (protection mécanique extérieure, isolation électrique ou autre) en une composition selon l'invention, la composition est extrudée sur le câble avant la réticulation.

L'invention est particulièrement avantageuse en ce qu'elle permet d'effectuer, grâce à un choix adéquat du générateur de radicaux libres et de la charge ignifugeante, la réticulation en milieu ambiant d'un polymère chargé contenant cette charge ignifugeante.

Contrairement au procédé de l'art antérieur, selon lequel la température du mélange du polymère de base chargé avec le polymère porteur du silane est élevée, de sorte que la réaction de réticulation qui a lieu ensuite doit nécessairement être effectuée en présence d'une grande quantité d'eau, le fait selon la présente invention de sélectionner un générateur de radicaux libres ayant une température de décomposition assez faible rend possible l'auto-réticulation ultérieure du polymère chargé.

## Revendications

1. Procédé de fabrication d'une composition à base de polymère réticulé au moyen de silane, comprenant les opérations suivantes ;
**a)** on mélange :
**i.** un polymère de base thermoplastique ou un mélange de polymères de base thermoplastiques, contenant une charge ignifugeante
**ii**. un polymère porteur d'un agent de réticulation à base de silane, ledit polymère porteur étant solide et choisi parmi les polymères poreux de type éponge, les polymères gonflables et les encapsulats, soluble ou dispersable dans ledit polymère de base et qui ne réagit pas avec le silane
**iii**. un générateur de radicaux libres
b) on chauffe ledit mélange
c) on expose ledit mélange à une quantité suffisante d'eau pour permettre à la réticulation dudit polymère de base de se produire
**caractérisé en ce que** lors de l'opération de chauffage, ledit mélange est porté à une température telle qu'elle entraîne la décomposition dudit générateur de radicaux libres sans provoquer la décomposition de ladite charge, ladite charge ignifugeante étant du trihydrate d'alumine, ledit générateur de radicaux libre étant choisi tel que sa température de décomposition absolue est inférieure à 165°C, et **en ce que** ladite opération de réticulation est effectuée à l'atmosphère ambiante.

2. Procédé selon la revendication 1, **caractérisé en ce que** l'on ajoute audit polymère porteur, préalablement au mélange, un polymère greffé avec de l'anhydride maléique.

3. Procédé selon la revendication 1 ou 2, **caractérisé en ce que** les opérations a), b) et c) sont effectuées soit simultanément, soit les unes à la suite des autres.

4. Composition à base de polymère réticulable au moyen de silane **caractérisée en ce qu**'elle est obtenue par le procédé selon l'une des revendications 1 à 3.

5. Procédé de fabrication d'un câble comprenant une gaine en une composition selon la revendication 3, **caractérisé en ce qu**'il comprend une opération d'extrusion avant ladite réticulation.

## Claims

1. Method to produce a composition containing a silane cross-linked polymer comprising the operations consisting of:
a) mixing the following:
i. a thermoplastic base polymer or a mixture of thermoplastic base polymers containing a flame-retardant filler;
ii. a polymer carrying a silane-based cross-linking agent, said carrier polymer being solid and chosen from among porous polymers of sponge type, swelling polymers and encapsulates, whether soluble or dispersible in said base polymer, and which do not react with the silane;
iii. a free radical generator.
b) heating said mixture,
c) exposing said mixture to a sufficient quantity of water to allow the cross-linking of said base polymer,
**characterized in that** during the heating operation, said mixture is brought to a temperature such that it leads to decomposition of said free radical generator without causing the decomposition of said filler, said flame-retardant filler being aluminium trihydroxide, said free radical generator being chosen such that its absolute decomposition temperature is less than 165°C, and **in that** said cross-linking operation is conducted in ambient air.

2. Method according to claim 1 **characterized in that**, prior to mixing, a polymer grafted with maleic anhydride is added to said carrier polymer.

3. Method according to claim 1 or 2, **characterized in that** operations a) b) and c) are conducted either simultaneously or subsequent to each other.

4. Composition containing a silane cross-linkable polymer, **characterized in that** it is obtained using a method according to any of claims 1 to 3.

5. Method to manufacture a cable comprising a cladding in a composition according to claim 4, **characterized in that** it includes an extrusion operation before said cross linking.

## Patentansprüche

1. Verfahren zur Herstellung einer Zusammensetzung auf Basis eines mittels Silan vernetzten Polymers, das die folgenden Arbeitsschritte umfasst:
a) Mischen:
i. eines thermoplastischen Basispolymers oder einer Mischung von thermoplastischen Basispolymeren, das bzw. die einen flammenhemmenden Füllstoff enthält;
ii. eines Träger-Polymers eines Vernetzungsmittels auf Silan-Basis, wobei das Träger-Polymer fest ist und ausgewählt ist aus den Schwamm-artigen porösen Polymeren, den aufblasbaren Polymeren und den Verkapselungen, in dem Basispolymer löslich oder dispergierbar ist, und das nicht mit dem Silan reagiert;
iii.eines Entwicklers von freien Radikalen;
b) Erwärmen der Mischung;
c) man setzt die Mischung einer ausreichenden Menge Wasser aus, um die Entstehung der Vernetzung des Basispolymers zu gestatten,
**dadurch gekennzeichnet, dass** während des Erwärmungsschritts die Mischung auf eine Temperatur gebracht wird, die die Zersetzung des Entwicklers der freien Radikale bewirkt, ohne die Zersetzung des Füllstoffs herbeizuführen, dass der flammenhemmende Füllstoff aus Tonerde-Trihydrat besteht, dass der Entwickler freier Radikale so ausgewählt ist, dass seine absolute Zersetzungstemperatur unter 165 °C liegt, und **dadurch**, dass der Vernetzungsschritt in Umgebungsatmosphäre ausgeführt wird.

2. Verfahren nach Anspruch 1, **dadurch gekennzeichnet, dass** dem Träger-Polymer vor dem Mischen ein Propfpolymer mit Maleinsäureanhydrid hinzugefügt wird.

3. Verfahren nach Anspruch 1 oder 2, **dadurch gekennzeichnet, dass** die Arbeitsschritte a), b) und c) entweder gleichzeitig oder einer nach dem anderen ausgeführt werden.

4. Zusammensetzung auf Basis eines mittels Silan vernetzbaren Polymers, **dadurch gekennzeichnet, dass** sie durch das Verfahren gemäß einem der Ansprüche 1 bis 3 erhalten wird.

5. Verfahren zur Herstellung eines Kabels, das eine Hülle aus einer Zusammensetzung gemäß Anspruch 4 aufweist, **dadurch gekennzeichnet, dass** es einen Extrusions-Arbeitsschritt vor der Vernetzung enthält.
